# EUROPÄISCHE PATENTSCHRIFT

(11) **EP 1 541 823 B1**
(45) Veröffentlichungstag und Bekanntmachung des Hinweises auf die Patenterteilung: **13.02.2008**
(21) Anmeldenummer: 04105621.9
(22) Anmeldetag: 09.11.2004
(51) Int. Cl.: F01N 3/28, F01N 1/04

(54) **Schalldämpfer für eine Abgasanlage**
Exhaust gas silencer
Silencieux d'échappement

(30) Priorität: 09.12.2003 DE 10357941
(43) Veröffentlichungstag der Anmeldung: 15.06.2005
(73) Patentinhaber: J. Eberspächer GmbH & Co. KG, 73730 Esslingen (DE)
(72) Erfinder: Wörner, Siegfried, 73734 Esslingen (DE); Buhmann, Rudolf, 73732 Esslingen (DE)
(74) Vertreter: Patentanwalts-Partnerschaft Rotermund + Pfusch + Bernhard

(56) Entgegenhaltungen:
- EP-A- 0 816 648
- EP-A- 0 953 741
- EP-A- 1 146 206
- US-A1- 2003 173 148

## Beschreibung

Die vorliegende Erfindung betrifft einen Schalldämpfer für eine Abgasanlage einer Brennkraftmaschine, insbesondere in einem Kraftfahrzeug.

Ein moderner Schalldämpfer (siehe z.B. EP 0 816 648 A1) kann in seinem Gehäuse ein Abgasbehandlungselement, wie z.B. ein Katalysator oder ein Partikelfilter, enthalten, das von den dem Schalldämpfer zugeführten Abgasen durchströmt wird. Aufgrund hoher Massendurchsätze kann es im Abgasbehandlungselement zu einem relativ großen Abgasgegendruck sowie zu störenden Strömungsgeräuschen kommen. Des Weiteren kann das Gehäuse des Schalldämpfers durch das durchströmte Abgasbehandlungselement zur Abstrahlung von Körperschallschwingungen angeregt werden, was ebenfalls störend sein kann.

Die vorliegende Erfindung beschäftigt sich mit dem Problem, für einen Schalldämpfer der eingangs genannten Art eine verbesserte Ausführungsform anzugeben, die insbesondere einen relativ niedrigen Durchströmungswiderstand aufweist, und/oder eine relativ niedrige Schallemission besitzt.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, innerhalb des Schalldämpfers zwei getrennte Strömungspfade auszubilden, die jeweils ein die Abgase dem Schalldämpfer zuführendes Einlaßrohr mit einem die Abgase vom Schalldämpfer abführenden Auslaßrohr verbinden. Jeder dieser Abgaspfade umfasst eine eigene Einlaßkammer, die mit dem Einlaßrohr kommuniziert, zumindest ein eigenes Abgasbehandlungselement sowie eine Auslaßkammer. Des Weiteren ist ein die beiden Auslaßkammern miteinander verbindendes Verbindungsrohr vorgesehen, so dass das Auslaßrohr nur an eine der Auslaßkammern angeschlossen sein muss. Die Aufteilung der zugeführten Abgase in zwei getrennte Strömungspfade vereinfacht die Auslegung der einzelnen Strömungspfade hinsichtlich eines reduzierten Massendurchsatzes durch den jeweiligen Strömungspfad und somit durch die Abgasbehandlungselemente. In der Folge können die Durchströmungswiderstände der einzelnen Strömungspfade und somit der Gesamtdurchströmungswiderstand des Schalldämpfers reduziert werden. Darüber hinaus führen die reduzierten Massendurchsätze zu einer verringerten Geräuschentwicklung bei der Durchströmung der Abgasbehandlungselemente.

Gemäß einer vorteilhaften Ausführungsform können die beiden Einlaßkammern durch eine gemeinsame Wand voneinander getrennt und zwischen den beiden Auslaßkammern angeordnet sein. Bei dieser Bauweise werden die Abgase somit zentral in das Schalldämpfergehäuse geleitet und anschließend über die Abgasbehandlungselemente der verschiedenen Strömungspfade in entgegengesetzten Richtungen aus den Einlaßkammern in die Auslaßkammern weitergeleitet. Durch diese gegenläufige Abströmung aus den Einlaßkammern kann das Schwingungsverhalten des Schalldämpfers positiv beeinflusst werden. Darüber hinaus lässt sich hierdurch der Wärmehaushalt im Schalldämpfer verbessern, was zu reduzierten Wärmeverlusten vor den Abgasbehandlungselementen führt, so dass diese mit erhöhter Effizienz arbeiten.

Zwischen den Einlaßkammern und der jeweiligen Auslaßkammer kann bei einer Weiterbildung jeweils eine Absorptionskammer angeordnet sein, durch welche das jeweilige Abgasbehandlungselement hindurchgeführt ist. Auf diese Weise können die Einlaßkammern gegenüber den Auslaßkammern im Hinblick auf eine reduzierte Körperschallübertragung gedämpft sein. Darüber hinaus können das Verbindungsrohr und/oder das Auslaßrohr durch eine oder durch beide Absorptionskammern hindurchgeführt werden, und zwar so, dass das jeweilige Rohr in der jeweiligen Absorptionskammer eine Perforation aufweist, durch die Luftschall aus dem strömenden Abgas in die jeweilige Absorptionskammer eindringen und darin gedämpft werden kann. Bei dieser Ausführungsform wird vorhandener Bauraum gezielt zur Schalldämpfungswirkung ausgenutzt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

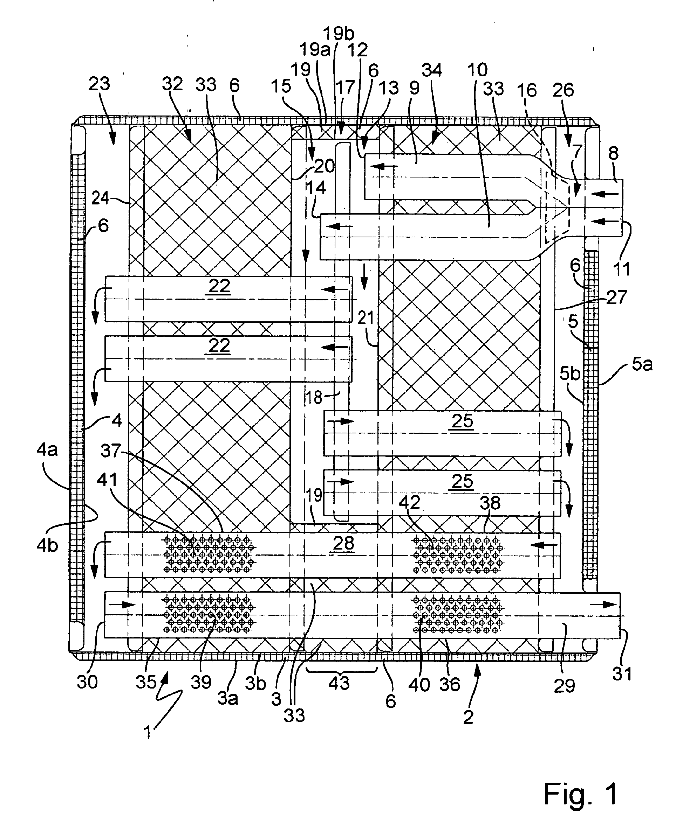

Die einzige Fig. 1 zeigt einen stark vereinfachten Längsschnitt durch einen erfindungsgemäßen Schalldämpfer.

Entsprechend Fig. 1 besitzt ein erfindungsgemäßer Schalldämpfer 1 ein Gehäuse 2, das beispielsweise einen zylindrischen Aufbau besitzt. Das Gehäuse 2 weist somit einen Mantel 3, der sich in Umfangsrichtung erstreckt, sowie zwei Böden 4, 5 auf, die an den Längsenden des Gehäuses 2 angeordnet sind. Vorzugsweise sind sowohl der Mantel 3 als auch die Böden 4 und 5 doppelwandig oder zweischalig ausgestaltet, wobei zwischen den Wänden bzw. Schalen 3a, 3b bzw. 4a, 4b bzw. 5a, 5b ein schallabsorbierendes Dämpfungsmaterial 6 angeordnet ist. Gleichzeitig kann dadurch die thermische Isolation des Gehäuses 2 verbessert werden.

Der Schalldämpfer 1 besitzt hier ein einziges Einlaßrohr 7 mit einem Einlaßabschnitt 8 und zwei Auslaßabschnitten 9 und 10, die vom Einlaßabschnitt 8 abzweigen bzw. damit kommunizieren. Der Einlaßabschnitt 8 enthält eine Einlaßöffnung 11 und führt die Abgase zu den Auslaßabschnitten 9, 10. Der erste Auslaßabschnitt 9 mündet über eine erste Auslaßöffnung 12 in eine erste Einlaßkammer 13 ein, während der zweite Auslaßabschnitt 10 über eine zweite Auslaßöffnung 14 in eine zweite Einlaßkammer 15 einmündet. Im Einlaßrohr 7 kann stromauf der Abzweigung des Einlaßabschnitts 8 in die beiden Auslaßabschnitte 9, 10 ein Mischerglied 16 angeordnet sein, das es ermöglicht, eine zugeführte Abgasströmung, die neben den Verbrennungsabgasen einen zusätzlichen Bestandteil enthält, vor der Abzweigung zu vermischen bzw. zu homogenisieren. Beispielsweise kann den Abgasen stromauf des Schalldämpfers 1 Harnstoff oder Ammoniak zugeführt werden. Alternativ können auch zwei Einlaßrohre vorgesehen sein, von denen das eine in der ersten Einlaßkammer 13 und das andere in der zweiten Einlaßkammer 15 mündet.

Die beiden Einlaßkammern 13, 15 sind vorzugsweise in einem gemeinsamen Einlaßkammergehäuse 17 ausgebildet, wobei eine gemeinsame Trennwand 18 die beiden Einlaßkammern 13, 15 voneinander trennt. Das Einlaßkammergehäuse 17 ist nach außen hermetisch dicht ausgebildet und umfasst einen sich in Umfangsrichtung erstreckenden Mantel 19 sowie zwei Böden 20, 21, die das Einlaßkammergehäuse 17 axial begrenzen. Zumindest der Mantel 19 kann zweischalig oder doppelwandig ausgebildet sein, wobei auch hier zwischen den Einzelwänden 19a und 19b Dämpfungsmaterial 6 angeordnet sein kann. Soweit ist auch das Einlaßkammergehäuse 17 gegenüber dem Schalldämpfergehäuse 2 thermisch und/oder hinsichtlich Körperschallübertragung mehr oder weniger isoliert.

Der erste Auslaßabschnitt 9 endet in der ersten Einlaßkammer 13, so dass ein Teil der über das Einlaßrohr 7 zugeführten Abgase in die erste Einlaßkammer 13 gelangt. Der erste Auslaßabschnitt 9 erstreckt sich dabei abgedichtet durch den zweiten Boden 21 des Einlaßkammergehäuses 17 hindurch. Der Schalldämpfer 1 enthält in seinem Gehäuse 2 wenigstens ein erstes Abgasbehandlungselement 22, das von den Abgasen durchströmbar ist und dabei die erste Einlaßkammer 13 mit einer ersten Auslaßkammer 23 verbindet. Im vorliegenden Fall sind wenigstens zwei erste Abgasbehandlungselemente 22 vorgesehen. Es ist klar, dass auch mehr als zwei erste Abgasbehandlungselemente 22 vorgesehen sein können. Wichtig ist, dass sämtliche erste Abgasbehandlungselemente 22 parallel durchströmt werden.

Die erste Auslaßkammer 23 ist umfangsseitig durch den Mantel 3 des Gehäuses 2 begrenzt. Zum anderen ist die erste Auslaßkammer 23 zwischen dem ersten Boden 4 des Gehäuses 2 und einer ersten Zwischenwand 24 ausgebildet, die sich im Innern des Gehäuses 2 erstreckt. Die ersten Abgasbehandlungselemente 22 erstrecken sich, jeweils abgedichtet, durch die Trennwand 18, den ersten Boden 4 des Einlaßkammergehäuses 17 und durch die erste Zwischenwand 24.

Im Unterschied dazu führt der zweite Auslaßabschnitt 10 den anderen Teil der über das Einlaßrohr 7 zugeführten Abgase in die zweite Einlaßkammer 15, von wo aus die Abgase durch wenigstens ein zweites Abgasbehandlungselement 25 in eine zweite Auslaßkammer 26 gelangen. In der gezeigten Schnittdarstellung sind zwei derartige zweite Abgasbehandlungselemente 25 erkennbar. Es ist klar, dass hier auch mehr als zwei Abgasbehandlungselemente 25 vorgesehen sein können. Sämtliche zweite Abgasbehandlungselemente 25 werden von den Abgasen parallel durchströmt. Der zweite Auslaßabschnitt 10 erstreckt sich zu diesem Zweck abgedichtet sowohl durch den zweiten Boden 21 des Einlaßkammergehäuses 17 sowie durch die Trennwand 18.

Auch die zweite Auslaßkammer 26 ist umfangsmäßig durch den Mantel 3 und in Längsrichtung durch den zweiten Boden 5 sowie durch eine im Gehäuse 2 angeordnete zweite Zwischenwand 27 begrenzt. Die zweiten Abgasbehandlungselemente 25 sind, jeweils abgedichtet, durch die Trennwand 18, den zweiten Boden 21 des Einlaßkammergehäuses 17 und die zweite Zwischenwand 27 hindurchgeführt.

Bei den Abgasbehandlungselementen 22, 25 handelt es sich - je nach Anwendungsform des Schalldämpfers 1 - beispielsweise um Katalysatorelemente, vorzugsweise SCR-Katalysatorelemente, (SCR steht für selective catalytic reaction) oder um Partikelfilterelemente, vorzugsweise Rußfilterelemente. Die Funktionsweise der einzelnen Abgasbehandlungselemente 22, 25 ist an sich klar und bedarf somit keiner näheren Erläuterung. Zweckmäßig sind die einzelnen Abgasbehandlungselemente 22, 25 jeweils als Einsätze ausgebildet, die in entsprechende Rohre eingesetzt werden, wobei diese Rohre fest im Gehäuse 2 angebracht sind.

Der erfindungsgemäße Schalldämpfer 1 enthält in seinem Gehäuse 2 außerdem zumindest ein Verbindungsrohr 28, das die beiden Auslaßkammern 23, 26 miteinander kommunizierend verbindet. Auf diese Weise können z.B. die über die zweiten Abgasbehandlungselemente 25 in die zweite Auslaßkammer 26 eintretenden Abgase durch das Verbindungsrohr 28 in die erste Auslaßkammer 23 übertreten. Das Verbindungsrohr 28 ist dabei jeweils abgedichtet durch die zweite Zwischenwand 27, durch die beiden Böden 20, 21 des Einlaßkammergehäuses 17 sowie durch die erste Zwischenwand 24 hindurchgeführt. Ebenso können mehrere parallel durchströmte Verbindungsrohre 28 vorgesehen sein.

Des Weiteren enthält das Gehäuse 2 des Schalldämpfers 1 hier ein einziges Auslaßrohr 29, das die Abgase von der ersten Auslaßkammer 23 aus dem Gehäuse 2 herausführt. Das Auslaßrohr 29 besitzt somit eine in der ersten Auslaßkammer 23 angeordnete Einlaßöffnung 30 sowie eine außerhalb des Gehäuses 2 angeordnete Auslaßöffnung 31. Das Auslaßrohr 29 ist bis auf den ersten Boden 4 des Gehäuses 2 durch sämtliche Böden und Wände, die sich innerhalb des Gehäuses 2 erstrecken, vorzugsweise abgedichtet hindurchgeführt. Alternativ können auch mehrere parallel durchströmte Auslaßrohre 29 vorgesehen sein.

Im Schalldämpfer 1 nach der Erfindung sind somit zwei Strömungspfade wie folgt ausgebildet:

Der erste Strömungspfad führt von der Einlaßöffnung 11 des Einlaßrohrs 7 durch den Einlaßabschnitt 8 und den ersten Auslaßabschnitt 9 in die erste Einlaßkammer 13. Von der ersten Einlaßkammer 13 gelangen die Abgase durch die ersten Abgasbehandlungselemente 22 in die erste Auslaßkammer 23, von der aus sie durch das Auslaßrohr 29 und dessen Auslaßöffnung 31 wieder aus dem Gehäuse 2 austreten.

Beim zweiten Strömungspfad treten die Abgase wieder über die Einlaßöffnung 11 des Einlaßrohrs 7 in den Einlaßabschnitt 8 ein und jetzt durch den zweiten Auslaßabschnitt 10 in die zweite Einlaßkammer 15 ein. Von der zweiten Einlaßkammer 15 gelangen die Abgase durch die zweiten Abgasbehandlungselemente 25 in die zweite Auslaßkammer 26 und von dieser durch das Verbindungsrohr 28 in die erste Auslaßkammer 23. Von der ersten Auslaßkammer 23 gelangen die Abgase auch im zweiten Strömungspfad durch das Auslaßrohr 29 aus dem Gehäuse 2 heraus.

Die dem Schalldämpfer 1 zugeführten Abgasteilströme sind somit von der Abzweigung im Einlaßrohr 7 bis zur ersten Auslaßkammer 23 voneinander getrennt. Hierdurch kann die Durchströmung des Schalldämpfers 1 insbesondere im Hinblick auf reduzierte Strömungswiderstände bei den Abgasbehandlungselementen 22, 25 optimiert werden. Beispielsweise kann der Massendurchsatz durch die einzelnen Abgasbehandlungselemente 22, 25 so weit reduziert werden, dass der Durchströmungswiderstand einen gewünschten niedrigen Wert erhält. Gleichzeitig kann dadurch eine störende Geräuschentwicklung bei der Durchströmung der Abgasbehandlungselemente 22, 25 reduziert oder vermieden werden.

Bei der hier gezeigten, bevorzugten Ausführungsform sind die Böden 20, 21 des Einlaßkammergehäuses 17 an einer Seite, gemäß Fig. 1 unten, über den Mantel 19 des Einlaßkammergehäuses 17 verlängert, wodurch das Einlaßkammergehäuse 17 erheblich besser im Gehäuse 2 des Schalldämpfers 1 abgestützt werden kann. Wichtig ist, dass sowohl das Verbindungsrohr 28 als auch das Auslaßrohr 29 innerhalb des Gehäuses 2 so verlegt sind, dass sie sich außerhalb des Einlaßkammergehäuses 17 erstrecken. Hierdurch werden Aufbau und Abdichtung des Einlaßkammergehäuses 17 sowie die Rohrführung im Gehäuse 2 erheblich vereinfacht.

Bei der hier gezeigten, bevorzugten Ausführungsform sind die beiden Einlaßkammern 13, 15 bzw. ist das Einlaßkammergehäuse 17 im wesentlichen mittig im Gehäuse 2 angeordnet. Jedenfalls sind die beiden Einlaßkammern 13, 15 zwischen den beiden Auslaßkammern 23, 26 angeordnet, die im Gehäuse 2 an dessen Längsenden ausgebildet sind. Zwischen der ersten Einlaßkammer 13 und der ersten Auslaßkammer 23 ist eine erste Absorptionskammer 32 ausgebildet, die zweckmäßig mit einem geeigneten Absorptionsmaterial 33 ausgefüllt ist. Genauer gesagt erstreckt sich die erste Absorptionskammer 32 zwischen der ersten Auslaßkammer 23 bzw. der ersten Zwischenwand 24 und der zweiten Einlaßkammer 15 bzw. dem ersten Boden 20 des Einlaßkammergehäuses 17. Des Weiteren ist zwischen der zweiten Einlaßkammer 15 und der zweiten Auslaßkammer 26 eine zweite Absorptionskammer 34 ausgebildet, die ebenfalls mit dem Absorptionsmittel 33 aufgefüllt ist. Auch hier erstreckt sich die zweite Absorptionskammer 34 genauer gesagt zwischen der zweiten Auslaßkammer 26 bzw. der zweiten Zwischenwand 27 und der ersten Einlaßkammer 13 bzw. dem zweiten Boden 21 des Einlaßkammergehäuses 17.

Die ersten Abgasbehandlungselemente 22 sind somit durch die erste Absorptionskammer 32 hindurch geführt, während die zweiten Abgasbehandlungselemente 25 durch die zweite Absorptionskammer 34 hindurch geführt sind. Durch die Absorptionskammern 32, 34 bzw. durch das darin untergebrachte Absorptionsmaterial 33 sind zumindest die Einlaßkammern 13, 15 im Hinblick auf eine Körperschallübertragung gegenüber den Auslaßkammern 23, 26 sowie insbesondere thermisch isoliert.

Das Auslaßrohr 29 erstreckt sich in einem ersten Abschnitt 35 durch die erste Absorptionskammer 32 und in einem zweiten Abschnitt 36 durch die zweite Absorptionskammer 34. In entsprechender Weise erstreckt sich auch das Verbindungsrohr 28 in einem ersten Abschnitt 37 durch die erste Absorptionskammer 32 und in einem zweiten Abschnitt 38 durch die zweite Absorptionskammer 34. Bei der hier gezeigten Ausführungsform ist das Auslaßrohr 29 im ersten Abschnitt 35 mit einer ersten Perforation 39 und in seinem zweiten Abschnitt 36 mit einer zweiten Perforation 40 versehen. In entsprechender

Weise ist hier außerdem das Verbindungsrohr 28 in seinem ersten Abschnitt 37 mit einer dritten Perforation 41 und in seinem zweiten Abschnitt 38 mit einer vierten Perforation 42 ausgestattet. Die Perforationen 39 bis 42 sind jeweils so ausgebildet, dass sie einen Übergang von Luftschall vom Abgas in die jeweilige Absorptionskammer 32 bzw. 34 ermöglichen. Insoweit kann im Schalldämpfer 1 außerdem Luftschall absorbiert und somit gedämpft werden.

Bei der hier gezeigten Ausführungsform ist außerdem der zwischen den Böden 20, 21 und zwischen dem Mantel 19 des Einlaßkammergehäuses 17 und dem Mantel 3 des Schalldämpfergehäuses 2 angeordnete, durch eine geschweifte Klammer angedeuteten Bereich 43 ebenfalls mit dem Absorptionsmaterial 33 aufgefüllt. Bei einer bevorzugten Weiterbildung können das Verbindungsrohr 28 und/oder das Auslaßrohr 29 in diesem Bereich 43 ebenfalls perforiert sein, derart, dass auch in diesem Bereich 43 Luftschall aus dem jeweiligen Rohr 28, 29 in das Absorptionsmaterial 33 übertreten und absorbiert werden kann.

Die Einlaßöffnung 30 des Auslaßrohrs 29 ist bei der hier gezeigten Ausführungsform bezüglich der Längsrichtung etwa mittig in der ersten Auslaßkammer 23 angeordnet. Bei einer anderen Ausführungsform kann es zur Erzielung einer optimalen Länge für das Auslaßrohr 29 wünschenswert sein, diese Einlaßöffnung 30 relativ nahe an den ersten Boden 4 des Gehäuses 2 heran zu führen. Um die Einströmung der Abgase in das Auslaßrohr 29 zu verbessern, kann das Auslaßrohr 29 innerhalb des in der ersten Auslaßkammer 23 angeordneten Abschnitts mit einer umfangsmäßigen Perforation versehen sein.

Für den Fall, dass die Abgasbehandlungselemente 22, 25 als SCR-Katalysatorelemente ausgebildet sind, ist das Einlaßkammergehäuse 17 nach außen hermetisch bzw. leckagefrei und gasdicht ausgestaltet. Auf diese Weise wird gewährleistet, dass das mit Harnstoff bzw. mit Ammoniak versetzte Abgas zwangsläufig durch die SCR-Katalysatorelemente 22, 25 hindurch strömen muss, um aus dem Einlaßkammergehäuse 17 austreten zu können. Auf diese Weise wird ein unkontrolliertes Entweichen von Harnstoff bzw. Ammoniak in die Umgebung des Schalldämpfers 1 vermieden.

Durch die zentrale Anordnung der Einlaßkammern 13, 15 ergibt sich eine besonders günstige Konfiguration im Hinblick auf minimale Wärmeverluste, wodurch für die jeweiligen Abgasbehandlungselemente 22, 25 günstige Betriebsbedingungen geschaffen werden. Des Weiteren führt die hier gezeigten Einbettung der Einlaßkammern 13, 15 zu einer reduzierten Körperschallanregung des Schalldämpfergehäuses 2.

## Patentansprüche

1. Schalldämpfer für eine Abgasanlage einer Brennkraftmaschine, insbesondere in einem Kraftfahrzeug,
- mit wenigstens einem Einlassrohr (7), das Abgas parallel in eine erste Einlaßkammer (13) und in eine zweite Einlaßkammer (15) führt,
- mit wenigstens einem vom Abgas durchströmbaren ersten Abgasbehandlungselement (22), das von der ersten Einlaßkammer (13) zu einer ersten Auslaßkammer (23) führt,
- **gekennzeichnet durch** wenigstens ein vom Abgas durchströmbares zweites Abgasbehandlungselement (25), das von der zweiten Einlaßkammer (15) zu einer zweiten Auslaßkammer (26) führt,
- wenigstens ein vom Abgas durchströmbares Verbindungsrohr (28), das von der zweiten Auslaßkammer (26) zur ersten Auslaßkammer (23) führt,
- und wenigstens ein Auslaßrohr (29), das Abgas von der ersten Auslaßkammer (23) aus dem Schalldämpfer (1) herausführt.

2. Schalldämpfer nach Anspruch 1,
**dadurch gekennzeichnet,**
**dass** die beiden Einlaßkammern (13,15) durch eine gemeinsame Wand (18) voneinander getrennt sind.

3. Schalldämpfer nach Anspruch 1 oder 2,
**dadurch gekennzeichnet,**
**dass** die beiden Einlaßkammern (13,15) zwischen den beiden Auslaßkammern (23,26) angeordnet sind.

4. Schalldämpfer nach einem der Ansprüche 1 bis 3,
**dadurch gekennzeichnet,**
**dass** zwischen der ersten Einlaßkammer (13) und der ersten Auslaßkammer (23) eine erste Absorptionskammer (32) angeordnet ist, durch die das wenigstens eine erste Abgasbehandlungselement (22) hindurchgeführt ist.

5. Schalldämpfer nach einem der Ansprüche 1 bis 4,
**dadurch gekennzeichnet,**
**dass** zwischen der zweiten Einlaßkammer (15) und der zweiten Auslaßkammer (26) eine zweite Absorptionskammer (34) angeordnet ist, durch die das wenigstens eine zweite Abgasbehandlungselement (25) hindurchgeführt ist.

6. Schalldämpfer nach Anspruch 4 oder 5,
**dadurch gekennzeichnet,**
- **dass** das Auslaßrohr (29) in einem durch die erste Absorptionskammer (32) hindurchgeführten Abschnitt (35) eine erste Perforation (39) aufweist, die einen Übergang von Luftschall vom Abgas in die erste Absorptionskammer (32) ermöglicht, und/oder
- **dass** das Auslaßrohr (29) in einem durch die zweite Absorptionskammer (34) hindurchgeführten Abschnitt (36) eine zweite Perforation (40) aufweist, die einen Übergang von Luftschall vom Abgas in die zweite Absorptionskammer (34) ermöglicht, und/oder
- **dass** das Verbindungsrohr (28) in einem durch die erste Absorptionskammer (32) hindurchgeführten Abschnitt (37) eine dritte Perforation (41) aufweist, die einen Übergang von Luftschall vom Abgas in die erste Absorptionskammer (32) ermöglicht, und/oder
- **dass** das Verbindungsrohr (28) in einem durch die zweite Absorptionskammer (34) hindurchgeführten Abschnitt (38) eine vierte Perforation (42) aufweist, die einen Übergang von Luftschall vom Abgas in die zweite Absorptionskammer (34) ermöglicht.

7. Schalldämpfer nach einem der Ansprüche 1 bis 6,
**dadurch gekennzeichnet,**
**dass** das Einlaßrohr (7) einen einzigen Einlaßabschnitt (8) und zwei davon abzweigende Auslaßabschnitte (9,10) aufweist, wobei der erste Auslaßabschnitt (9) in der ersten Einlasskammer (13) mündet, während der zweite Auslaßabschnitt (10) in der zweiten Einlaßkammer (15) mündet.

8. Schalldämpfer nach Anspruch 7,
**dadurch gekennzeichnet,**
**dass** im Bereich der Abzweigung ein Mischerglied (16) angeordnet ist.

9. Schalldämpfer nach einem der Ansprüche 1 bis 8,
**dadurch gekennzeichnet,**
**dass** die Einlaßkammern (13,15) in einem separaten Einlaßkammergehäuse (17) ausgebildet sind, das in einem Gehäuse (2) des Schalldämpfers (1) angeordnet ist, wobei sich das Auslaßrohr (29) und das Verbindungsrohr (28) im Schalldämpfergehäuse (2) außerhalb des Einlaßkammergehäuses (17) erstrecken.

10. Schalldämpfer nach Anspruch 9,
**dadurch gekennzeichnet,**
**dass** ein Mantel (19) des Einlaßkammergehäuses (17) schallgedämpft im Schalldämpfergehäuse (2) angeordnet ist.

11. Schalldämpfer nach einem der Ansprüche 1 bis 10,
**dadurch gekennzeichnet,**
**dass** der Schalldämpfer (1) ein Gehäuse (2) mit einem Mantel (3) und zwei Böden (4,5) aufweist, wobei Mantel (3) und Böden (4,5) schallgedämpft ausgestaltet sind.

12. Schalldämpfer nach einem der Ansprüche 1 bis 11,
**dadurch gekennzeichnet,**
**dass** das wenigstens eine erste Abgasbehandlungselement (22) und das wenigstens eine zweite Abgasbehandlungselement (25) Partikelfilterelemente, insbesondere Rußfilterelemente, oder Katalysatorelemente, insbesondere SCR-Katalysatorelemente, sind.

## Claims

1. A muffler for an exhaust system of an internal combustion engine, in particular in a motor vehicle,
- having at least one intake pipe (7) which carries the exhaust gas in parallel into a first intake chamber (13) and into a second intake chamber (15),
- having at least one first exhaust gas treatment element (22) through which the exhaust gas can flow and which leads from the first intake chamber (13) to a first exhaust chamber (23),
**characterized by** at least one second exhaust gas treatment element (25) through which the exhaust gas can flow and which leads from the second intake chamber (15) to a second exhaust chamber (26),
- at least one connecting pipe (28) which leads from the second exhaust chamber (26) to the first exhaust chamber (23) and through which the exhaust gas can flow,
- and at least one exhaust pipe (29) that carries exhaust gas from the first exhaust chamber (23) out of the muffler (1).

2. The muffler according to Claim 1,
**characterized in that**
the two intake chambers (13, 15) are separated from one another by a common wall (18).

3. The muffler according to Claim 1 or 2,
**characterized in that**
the two intake chambers (13, 15) are arranged between the two exhaust chambers (23, 26).

4. The muffler according to any one of Claims 1 through 3,
**characterized in that**
a first absorption chamber (32) is arranged between the first intake chamber (13) and the first exhaust chamber (23), the at least one first exhaust gas treatment element (22) being passed through the absorption chamber.

5. The muffler according to any one of Claims 1 through 4,
**characterized in that**
a second absorption chamber (34) is arranged between the second intake chamber (15) and the second exhaust chamber (26), a second exhaust gas treatment element (25) being passed through the second absorption chamber.

6. The muffler according to Claim 4 or 5,
**characterized in that**
- in a section (35) passing through the first absorption chamber (32), the exhaust pipe (29) has a first perforation (39), which allows airborne sound to be transferred from the exhaust gas into the first absorption chamber (32) and/or
- in a section (36) passing through the second absorption chamber (34), the exhaust pipe (29) has a second perforation (40), which allows a transfer of airborne sound from the exhaust gas into the second absorption chamber (34) and/or
- in a section (37) passing through the first absorption chamber (32), the connecting pipe (28) has a third perforation (41), which allows a transfer of airborne sound from the exhaust gas into the first absorption chamber (32) and/or
- in a section (38) passing through the second absorption chamber (34), the connecting pipe (28) has a fourth perforation (42), which allows a transfer of airborne sound from the exhaust gas into the second absorption chamber (34).

7. The muffler according to any one of Claims 1 through 6,
**characterized in that**
the intake pipe (7) has a single intake section (8) and two outlet sections (9, 10) branching off from it, whereby the first outlet section (9) opens into the first intake chamber (13) while the second outlet section (10) opens into the second intake chamber (15).

8. The muffler according to Claim 7,
**characterized in that**
a mixer element (16) is arranged in the area of the branch.

9. The muffler according to any one of Claims 1 through 8,
**characterized in that**
the intake chambers (13, 15) are designed in a separate intake chamber housing (17), which is arranged in a housing (2) of the muffler (1), whereby the exhaust pipe (29) and the connecting pipe (28) extend in the muffler housing (2) outside of the intake chamber housing (17).

10. The muffler according to Claim 9,
**characterized in that**
a jacket (19) of the intake chamber housing (17) is arranged in the muffler housing (2) so that it is silenced.

11. The muffler according to any one of Claims 1 through 10,
**characterized in that**
the muffler (1) has a housing (2) with a jacket (3) and two plates (4, 5), whereby the jacket (3) and plates (4, 5) are designed for silencing.

12. The muffler according to any one of Claims 1 through 11,
**characterized in that**
the at least one first exhaust gas treatment element (22) and the at least one second exhaust gas treatment element (25) comprise particulate filter elements, especially particulate filter elements or catalytic converter elements, especially SCR catalytic converter elements.

## Revendications

1. Silencieux d'échappement pour une installation d'échappement d'un moteur à combustion interne, notamment dans un véhicule automobile,
- avec au moins un tuyau d'entrée (7) qui introduit les gaz d'échappement parallèlement dans une première chambre d'entrée (13) et dans une seconde chambre d'entrée (15),
- avec au moins un premier élément de traitement des gaz d'échappement (22), pouvant être traversé par les gaz d'échappement, et menant de la première chambre d'entrée (13) dans une première chambre de sortie (23),
**caractérisé par** au moins un second élément de traitement des gaz d'échappement (25), pouvant être traversé par les gaz d'échappement, et menant de la seconde chambre d'entrée (15) dans une seconde chambre de sortie (26),
- au moins un tuyau de liaison (28), pouvant être traversé par les gaz d'échappement, et menant de la seconde chambre de sortie (26) à la première chambre de sortie (23),
- et au moins un tuyau de sortie (29), par lequel les gaz d'échappement de la première chambre de sortie (23) quittent le silencieux (1).

2. Silencieux d'échappement selon la revendication 1,
**caractérisé en ce que**
les deux chambres d'entrée (13, 15) sont séparées l'une de l'autre par une paroi commune (18).

3. Silencieux d'échappement selon la revendication 1 ou 2,
**caractérisé en ce que**
les deux chambres d'entrée (13, 15) sont disposées entre les deux chambres de sortie (23, 26).

4. Silencieux d'échappement selon l'une des revendications 1 à 3,
**caractérisé en ce qu'**
une première chambre d'absorption (32), traversée par l'au moins un premier élément de traitement des gaz d'échappement (22), est disposée entre la première chambre d'entrée (13) et la première chambre de sortie (23).

5. Silencieux d'échappement selon l'une des revendications 1 à 4,
**caractérisé en ce qu'**
une seconde chambre d'absorption (34), traversée par l'au moins un second élément de traitement des gaz d'échappement (25), est disposée entre la seconde chambre d'entrée (15) et la seconde chambre de sortie (26).

6. Silencieux d'échappement selon la revendication 4 ou 5,
**caractérisé en ce que**
- le tuyau de sortie (29) présente une première perforation (39), qui permet un passage du bruit aérien des gaz d'échappement dans la première chambre d'absorption (32), dans une section (35) passant par la première chambre d'absorption (32), et/ou
- le tuyau de sortie (29) présente une deuxième perforation (40), qui permet un passage du bruit aérien des gaz d'échappement dans la seconde chambre d'absorption (34), dans une section (36) passant par la seconde chambre d'absorption (34), et/ou
- le tuyau de liaison (28) présente une troisième perforation (41), qui permet un passage du bruit aérien des gaz d'échappement dans la première chambre d'absorption (32), dans une section (37) passant par la première chambre d'absorption (32), et/ou
- le tuyau de liaison (28) présente une quatrième perforation (42), qui permet un passage du bruit aérien des gaz d'échappement dans la seconde chambre d'absorption (34), dans une section (38) passant par la seconde chambre d'absorption (34).

7. Silencieux d'échappement selon l'une des revendications 1 à 6,
**caractérisé en ce que**
le tuyau d'entrée (7) présente une seule section d'entrée (8) et deux sections de sortie (9, 10) partant de celle-ci au moyen d'un embranchement, la première section de sortie (9) débouchant dans la première chambre d'entrée (13) et la seconde section de sortie (10) débouchant dans la seconde chambre d'entrée (15).

8. Silencieux d'échappement selon la revendication 7,
**caractérisé en ce qu'**
un organe mélangeur (16) est disposé dans la zone de l'embranchement.

9. Silencieux d'échappement selon l'une des revendications 1 à 8,
**caractérisé en ce que**
les chambres d'entrée (13, 15) sont réalisées dans un boîtier des chambres d'entrée (17) séparé disposé dans un boîtier (2) du silencieux d'échappement (1) le tuyau de sortie (29) et le tuyau de liaison (28) s'étendant à l'extérieur du boîtier des chambres d'entrée (17) à l'intérieur du boîtier (2) du silencieux d'échappement.

10. Silencieux d'échappement selon la revendication 9,
**caractérisé en ce qu'**
une enveloppe (19) du boîtier de chambres d'entrée (17) est disposé de manière insonorisée dans le boîtier (2) du silencieux d'échappement.

11. Silencieux d'échappement selon l'une des revendications 1 à 10,
**caractérisé en ce que**
le silencieux d'échappement (1) est muni d'un boîtier (2) avec une enveloppe (3) et deux fonds (4, 5), l'enveloppe (3) et les fonds (4, 5) étant réalisés de manière insonorisée.

12. Silencieux d'échappement selon l'une des revendications 1 à 11,
**caractérisé en ce que**
l'au moins un premier élément de traitement des gaz d'échappement (22) et l'au moins un second élément de traitement des gaz d'échappement (25) sont constitués par des éléments de filtres à particules, notamment des éléments de filtres à suie ou des éléments catalyseurs, notamment des éléments catalyseurs SCR.
